# EUROPEAN PATENT SPECIFICATION

(11) **EP 4 445 813 B1**
(45) Date of publication and mention of the grant of the patent: **02.09.2026**
(21) Application number: 23207787.5
(22) Date of filing: 03.11.2023
(51) Int. Cl.: A47J 37/06

(54) **AIR FRYER**
LUFTFRITEUSE
FRITEUSE À AIR CHAUD

(30) Priority: 14.04.2023 CN 202310405448
(43) Date of publication of application: 16.10.2024
(73) Proprietor: Foshan Shunde Midea Electrical Heating Appliances Manufacturing Co., Ltd., Foshan, Guangdong 528311 (CN)
(72) Inventor: XU, Zhibo, Foshan, 528311 (CN); CAO, Wei, Foshan, 528311 (CN); DU, Zujing, Foshan, 528311 (CN); SUN, Honglei, Foshan, 528311 (CN); ZHANG, Mamei, Foshan, 528311 (CN); ZHANG, Qian, Foshan, 528311 (CN)
(74) Representative: RGTH

(56) References cited:
- WO-A1-2010/034338
- WO-A1-2019/238605
- CN-U- 218 484 375

## Description

### TECHNICAL FIELD

The present application relates to the technical field of cooking appliances, and in particular to an air fryer.

### BACKGROUND

An air fryer is a cooking appliance that uses a fan to blow high-temperature air into a pot to heat food. Due to the rapid dehydration of the food surface by the high-speed hot air to cause the Maillard reaction, the surface of the food becomes golden and crisp, achieving the deep-fried taste.

However, the air fryers currently on the market are less effective at heating food. For example, the hot air can only conduct convective heat exchange with one surface of the food (such as the upper surface of the food or the lower surface of the food) to form heating, which will cause uneven heating of the upper and lower surfaces of the food.

CN 218 484 375 U related to a cooking utensil, wherein the cooking utensil comprises a body, a first food bearing part, a hot air assembly, a drainage part, at least two flow guide parts and a second food bearing part, the body is provided with a containing cavity, and the first food bearing part is arranged in the containing cavity and comprises a cooking cavity with an opening in one side; an air duct communicated with the cooking cavity is arranged between the first food bearing part and the cavity wall of the containing cavity, the hot air assembly is arranged on the body and located on the first side of the first food bearing part, the hot air assembly can heat and drive air in the cooking cavity to circulate, and the drainage part is arranged on the body, located in the air duct and located on the second side of the first food bearing part. The at least two flow guide parts are arranged on the body at intervals around the drainage part, and an interval is formed between the flow guide parts and the drainage part. The second food bearing part is detachably installed on the second side of the first food bearing part, a first air passing hole is formed in the second food bearing part, and/or a first ventilation hole is formed between the second food bearing part and the inner wall of the containing cavity or in the portion, close to the inner wall of the containing cavity, of the second food bearing part. WO 2010 / 034 338 A1 describes an apparatus for preparing food comprising a food preparation chamber with an air-permeable bottom wall and an upper air discharge opening, a fan for moving hot air successively through the bottom wall, the food preparation chamber and the discharge opening, air guide means for returning the air from the discharge opening towards the bottom wall separate from the food preparation chamber, heat radiating means positioned in the upper part of the food preparation chamber and air guide means below the food preparation chamber and on top of a bottom part for directing the air flow essentially upwards into food present in the food preparation chamber. Said air guide means comprises at least one air guide rib arranged along a curved line extending substantially towards a central region of said bottom part, wherein said air guide rib is provided with a concave side which, as seen in a vertical section through said air guide rib, along at least part of its extension along said curved line includes an angle with the bottom part smaller than 90°. WO 2019 / 238 605 A1 discloses an accessory provided for an air-based fryer, and an air-based fryer having the accessory, the accessory having a perforated base with an open side. A handle is provided for mounting the perforated base in a cooking chamber of the air-based fryer, with the perforated base suspended above a base of the cooking chamber.

### SUMMARY

The invention is defined by the appended claims.

Embodiments of the present application provide an air fryer to solve the above technical problems.

Embodiments of the present application achieve the above objects through the following technical solutions.

Embodiments of the present application provide an air fryer, the air fryer comprises:
a pot body;
a fan provided in the pot body; and
a frying bucket assembly provided with a frying bucket, a first baking pan and a wind-shielding member; the first baking pan is located in the frying bucket and below the fan; a first air channel is formed above the first baking pan, and a second air channel is formed below the first baking pan; the wind-shielding member is located in the second air channel.

According to the invention, the wind-shielding member reduces a speed of wind passing through the wind-shielding member so that the wind is easy to pass through the first baking pan from a position close to a center under a negative pressure formed by the fan.

According to the invention, an air passage hole is formed on the first baking pan, and wind in the first air channel enters the second air channel through the air passage hole; the wind driven by the movement of the fan to flow in the second air channel acts on the wind entering the second air channel through the air passage hole.

According to the invention, the wind driven by the movement of the fan to flow in the second air channel makes the wind entering the second air channel through the air passage hole move in a lower pressure position.

In some embodiments, the wind-shielding member comprises a plurality of wind-shielding ribs.

In some embodiments, the wind-shielding ribs are provided in a vertical plane, extending in a radial direction, and converging at a central position of the wind-shielding member.

In some embodiments, three or more of the wind-shielding ribs are provided and are arranged substantially in a cross.

In some embodiments, each of the wind-shielding ribs is provided with a curved extension.

In some embodiments, the wind-shielding member comprises:
a raised portion provided on the frying bucket and located in the second air channel; and
at least two wind-shielding ribs provided at interval around the raised portion.

In some embodiments, an interval is provided between an end, close to the wind-shielding rib, of each raised portion and the raised portion; and/or along a direction from the raised portion to the fan, the raised portion is of at least one of contracted conical shape, conical shape and hemispherical shape.

In some embodiments, a flow guide surface is formed on a bottom of the frying bucket, and the raised portion and at least two of the wind-shielding ribs are provided on the flow guide surface.

In some embodiments, along a direction from the wind-shielding rib to the fan, the flow guide surface is of at least one of constricted conical shape, conical shape, and spherical shape; or, the flow guide surface is a plane.

In some embodiments, the flow guide surface comprises a center line L1 extending in a vertical direction; the wind-shielding rib extends along a extension line L2 on a horizontal plane in a direction close to the center line, and the extension line does not intersect the center line; the extension line comprises a straight line and/or a curved line.

In some embodiments, the wind-shielding member is elongated.

In some embodiments, a length direction of the wind-shielding member is parallel to a width direction or a length direction or a diagonal line of the first baking pan.

In some embodiments, the wind-shielding member is arc-shaped or wave-shaped.

In some embodiments, a plurality of wind-shielding members are distributed around a center line of the first baking pan or are arranged at intervals along a width direction or a length direction of the first baking pan.

In some embodiments, the wind-shielding member is connected to a bottom of the frying bucket and a ventilation gap is provided between the wind-shielding member and a bottom wall of the first baking pan; and/or, the wind-shielding member is connected to a bottom of the first baking pan and a ventilation gap is provided between the wind-shielding member and the bottom of the frying bucket.

In some embodiments, a surface, facing the bottom of the frying bucket, of the bottom wall of the first baking pan is provided with an air guide channel, and the air guide channel is configured as the second air channel.

In some embodiments, the surface, facing the bottom of the frying bucket, of the bottom wall of the first baking pan is protruded with a plurality of air guide members, and the plurality of air guide members are distributed at intervals along an edge of the bottom wall.

In some embodiments, the frying bucket assembly further comprises:
at least one second baking pan;
the at least one second baking pan is located between the first baking pan and the fan; the first air channel is formed between the second baking pan and the first baking pan, and a third air channel is formed between the second baking pan and the fan.

In the air fryer provided by the embodiments of the present application, the fan is assembled in the pot body, and the first baking pan is placed in the frying bucket and below the fan. The first air channel is formed above the first baking pan, and the second air channel is formed below the first baking pan. The wind-shielding member is located in the second air channel. In this way, the hot air flow in the first air channel can heat the upper surface of the food, and the hot air flow in the second air channel can flow from the first baking pan to the food, heating the lower surface of the food, so that the upper and lower surfaces of the food are heated more evenly. Since the wind-shielding member is located in the second air channel, the wind-shielding member effectively reduces the circumferential rotation speed of the hot air flow by squeezing the hot air flow in the second air channel and then releasing it, which helps the negative pressure formed by the fan to quickly suck up the decelerated hot air and penetrate the food, and then improves the heat exchange effect of the second air channel, which helps to achieve a consistent heating effect on the upper and lower surfaces of the food.

### BRIEF DESCRIPTION OF THE DRAWINGS

In order to more clearly illustrate the technical solutions in the embodiments of the present application, the following will briefly introduce the drawings that need to be used in the description of the embodiments. Obviously, the drawings in the following description are only some embodiments of the present application. For those skilled in the art, other drawings can also be obtained based on these drawings without any creative effort.
FIG. 1 shows a schematic structural view of an air fryer according to an embodiment of the present application.
FIG. 2 shows a partial structural schematic view of the air fryer in FIG. 1.
FIG. 3 shows an exploded view of a frying bucket assembly of the air fryer according to an embodiment of the present application.
FIG. 4 shows a schematic view of an air flow of the air fryer according to an embodiment of the present application.
FIG. 5 shows another schematic view of the air flow of the air fryer according to an embodiment of the present application.
FIG. 6 shows an exploded schematic view of a frying bucket assembly of the air fryer according to another embodiment of the present application.
FIG. 7 shows an exploded schematic view of the frying bucket assembly of the air fryer according to another embodiment of the present application.
FIG. 8 shows a schematic structural view of a frying bucket and a wind-shielding member of the air fryer according to an embodiment of the present application.
FIG. 9 shows a schematic structural view of the frying bucket and the wind-shielding member of the air fryer according to another embodiment of the present application.
FIG. 10 shows a structural schematic view of another perspective of the frying bucket and the wind-shielding member of the air fryer in FIG. 9 of the present application.
FIG. 11 shows a schematic cross-sectional view of the frying bucket and the wind-shielding member of the air fryer along line XI in FIG. 10 of the present application.
FIG. 12 shows a schematic structural view of a first baking pan of the frying bucket assembly of the air fryer according to an embodiment of the present application.
FIG. 13 shows a schematic structural view of the first baking pan of the frying bucket assembly of the air fryer according to another embodiment of the present application.
FIG. 14 shows a schematic structural view of the first baking pan of the frying bucket assembly of the air fryer according to another embodiment of the present application.
FIG. 15 shows a schematic structural view of the first baking pan of the frying bucket assembly of the air fryer according to another embodiment of the present application.
FIG. 16 shows an exploded view of the frying bucket assembly of the air fryer according to another embodiment of the present application.
FIG. 17 shows an exploded view of the frying bucket assembly of the air fryer according to another embodiment of the present application.
FIG. 18 shows an exploded view of the frying bucket assembly of the air fryer according to another embodiment of the present application.

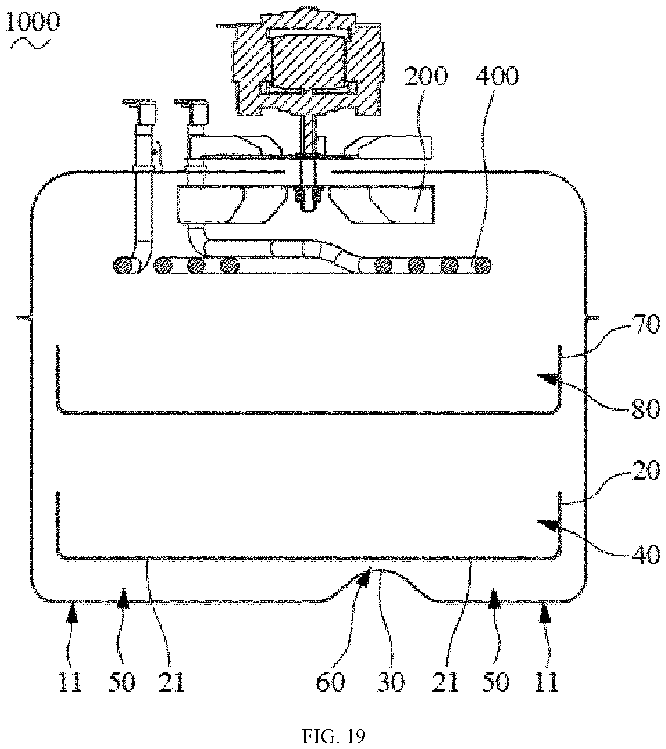

FIG. 19 shows a schematic cross-sectional view of the air fryer according to another embodiment of the present application.

### DETAILED DESCRIPTION OF THE EMBODIMENTS

In order to enable those skilled in the art to better understand the solutions of the present application, the technical solutions in the embodiments of the present application will be clearly and completely described below in conjunction with the drawings in the embodiments of the present application. Apparently, the described embodiments are only some, and not all embodiments of the present application. Based on the embodiments in the present application, all other embodiments obtained by those skilled in the art without creative efforts shall fall within the protection scope of the present application.

The following will clearly and completely describe the technical solutions in the embodiments of the present application with reference to the drawings in the embodiments of the present application.

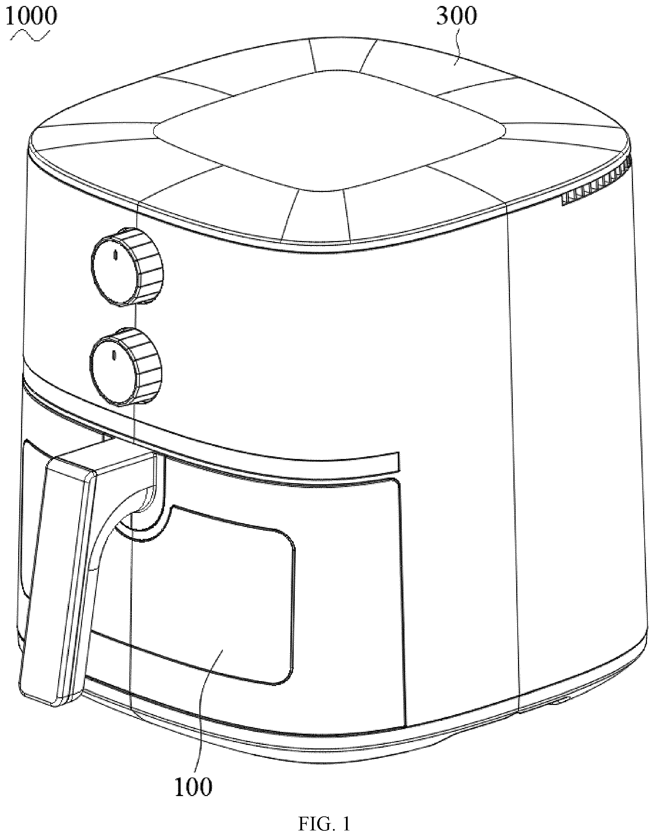

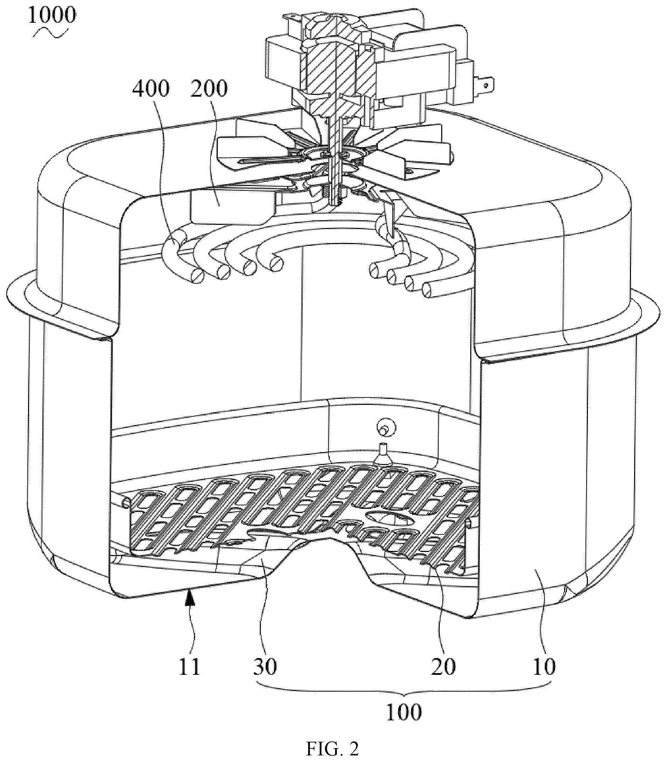

Referring to FIG. 1 and FIG. 2, an embodiment of the present application provides an air fryer 1000, which is a cooking appliance that uses hot air to heat food. Air cooking appliances capable of realizing the air cooking function, such as an air oven and an integrated frying and roasting machine, also belong to the air fryer 1000.

In some embodiments, the air fryer 1000 may have the following structural forms.

The air fryer 1000 may comprise a fan 200, which can drive the air in the air fryer 1000 to form an internal circulation, for example, the fan 200 can absorb air in the axial direction during rotation, and can throw the collected air out in the radial direction, and can form a spiral thermal airflow. The air fryer 1000 can also comprise a pot body 300, and the fan 200 can be assembled in the pot body 300; the air fryer 1000 can also comprise a frying bucket assembly 100, and the frying bucket assembly 100 can be placed in the pot body 300, or can be taken out from the pot body 300. The air fryer 1000 may further comprise a heating element 400 capable of heating circulating air inside the air fryer 1000 into hot air.

In some embodiments, the heating element 400 can be located on the side of the fan 200 facing the frying bucket assembly 100, so that the fan 200 can make the air contact with the heating element 400 when the fan 200 sucks the air in the axial direction to achieve the effect of heating the air.

In some embodiments, the fan 200 may be integrated with the heating element 400. For example, the fan 200 may be used as a heating fan, so that the fan 200 forms a hot air flow during rotation.

Referring to FIGS. 2 to 3, the frying bucket assembly 100 comprises a frying bucket 10, a first baking pan 20 and a wind-shielding member 30.

In some embodiments, the frying bucket assembly 100 may further comprise other structures, for example, the frying bucket assembly 100 may further comprise a handle, which may be connected to the outer wall of the frying bucket 10 so as to facilitate the user to hold the frying bucket assembly 100.

In some embodiments, the outer contour of the frying bucket 10 may be generally in the shape of a cylinder, a prism, or the like.

The first baking pan 20 is placed in the frying bucket 10. The first baking pan 20 can be used to carry food.

In some embodiments, the first baking pan 20 is detachably placed in the frying bucket 10. For example, the first baking pan 20 can be placed in the frying bucket 10, and for another example, the first baking pan 20 can be taken out of the frying bucket 10.

The first baking pan 20 may comprise a bottom wall 21, and the bottom wall 21 may be generally plate-shaped, for example, the bottom wall 21 may be generally circular plate-shaped, square plate-shaped or other shapes. The outer contour of the bottom wall 21 may match the inner contour of the frying bucket 10.

The bottom wall 21 is opposite to the fan 200. For example, when the air fryer 1000 is placed and used normally, the fan 200 may be located above the bottom wall 21.

The first baking pan 20 may be formed with an air passage hole 211 so that the bottom wall 21 is a hollow bottom wall. For example, the bottom wall 21 may be provided with the air passage hole 211, and the air passage hole 211 may penetrate through two opposite surfaces of the bottom wall 21. For example, the air passage hole 211 may pass through the surface of the bottom wall 21 facing the fan 200, and the air passage hole 211 may also pass through the surface of the bottom wall 21 facing the bottom 11 of the frying bucket 10.

In some embodiments, the number of air passage holes 211 may be multiple, and the plurality of air passage holes 211 may be distributed on the bottom wall 21 at intervals.

In the present application, the term "plurality" means greater than or equal to two, for example, the number of air passage holes 211 may be two, three, four, five, six, ten or other numbers.

In some embodiments, the air passage holes 211 may be circular holes, oval holes, triangular holes, square holes, polygonal holes or other shapes.

In some embodiments, when there are multiple air passage holes 211, at least one parameter such as shape and size among the plurality of air passage holes 211 may be the same or partly the same or completely different.

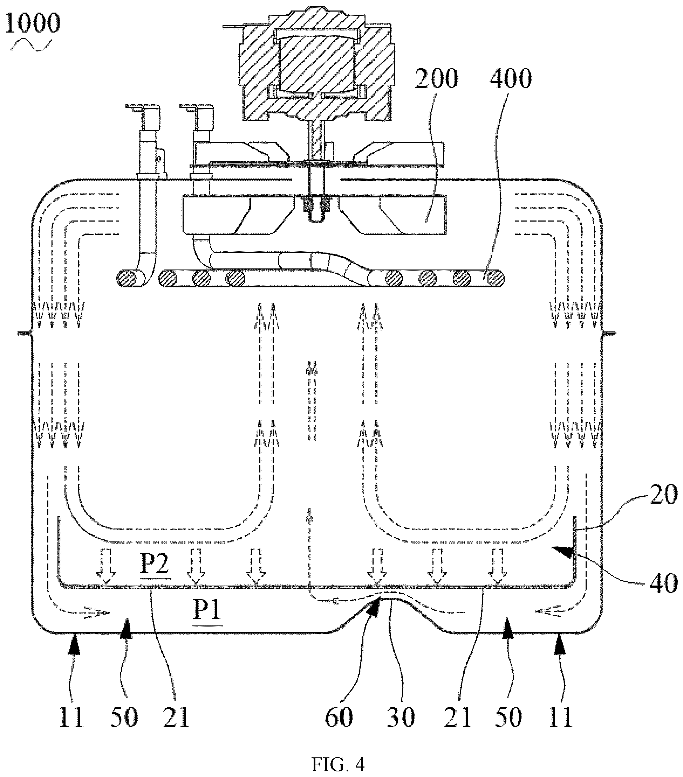

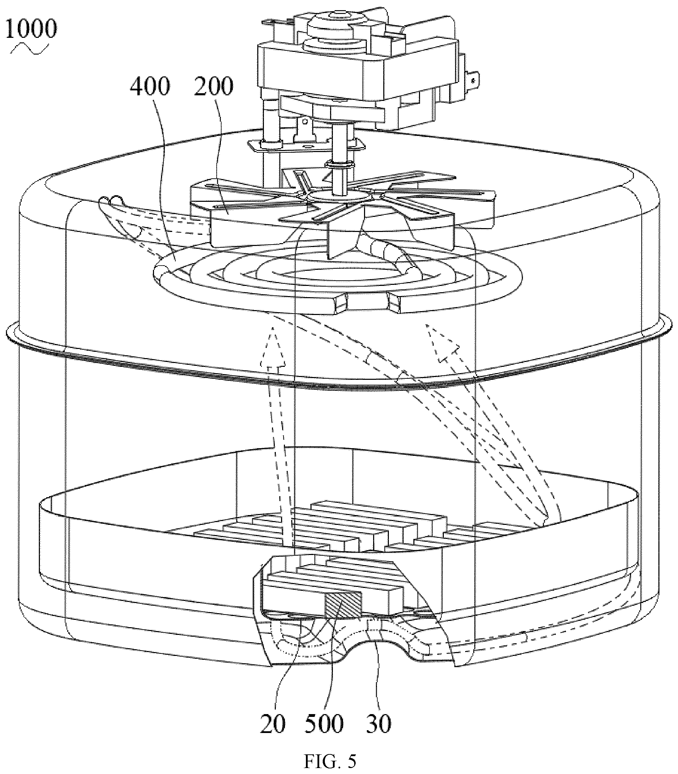

Referring to FIG. 4 and FIG. 5, the dotted lines with arrows in FIG. 4 and FIG. 5 indicate the flow direction of the air flow. A first air channel 40 is formed above the first baking pan 20, and a second air channel 50 is formed below the first baking pan 20. The first air channel 40 communicates with the second air channel 50. The second air channel 50 is located between the bottom wall 21 of the first baking pan 20 and the bottom 11 of the frying bucket 10. During the rotation of the fan 200, the fan 200 will form a top-down spiral hot air flow. When the hot air flow blows to the first baking pan 20, part of the hot air flow enters the first air channel 40, and this part of the air flow can heat the upper surface of the food 500; a part of the hot air flow flows to the slit between the first baking pan 20 and the frying bucket 10, that is, this part of the air flow will flow to the second air channel 50. Because the bottom wall 21 is a hollow bottom wall, the hot air flow of the second air channel 50 will flow from the first baking pan 20 to the food 500, and the lower surface of the food 500 is heated so that the upper and lower surfaces of the food 500 are heated more evenly. Moreover, since the fan 200 rotates at a high speed, a negative pressure will be formed below the fan 200, so the hot air near the bottom wall 21 will be sucked up under the action of the pressure difference, and participate in the internal circulation process again.

The wind-shielding member 30 is located in the second air channel 50, for example, the wind-shielding member 30 may be located between the bottom wall 21 of the first baking pan 20 and the bottom 11 of the frying bucket 10. For example, there is a ventilation gap 60 between the wind-shielding member 30 and at least one of the bottom wall 21 of the first baking pan 20 and the bottom 11 of the frying bucket 10. For example, there is a ventilation gap 60 between the windshield 30 and the bottom wall 21 of the first grill pan 20; for another example, there is a ventilation gap 60 between the wind-shielding member 30 and the bottom 11 of the frying bucket 10; for another example, the wind-shielding member 30 not only has a ventilation gap 60 with the bottom wall 21 of the first baking pan 20, but also has a ventilation gap 60 with the bottom 11 of the frying bucket 10.

The wind-shielding member 30 is used to reduce the speed of the wind passing through the wind-shielding member 30, so that it is easier to pass through the first baking pan 20 from a position close to the center under the negative pressure formed by the fan 200. Since the center of the first baking pan 20 is a cold area, the center of the fan 200 can just form a negative pressure to suck hot air up. When the hot air flow in the second air channel 50 has a high rotation speed, the negative pressure formed by the fan 200 may not be able to suck the hot air quickly to penetrate the food. For example, under the condition that the negative pressure formed by the fan 200 is constant, the upward force of the fan 200 on the hot air flow remains unchanged, and because the hot air flow has a higher rotational speed, the hot air flow has a tendency to spread radially outward; and the higher the rotation speed, the more the hot air flow deviates from the rotation axis of the fan 200. And the wind-shielding member 30 helps to reduce the speed of the hot air flow flowing in the second air channel 50, for example, when the hot air flow flows to the ventilation gap 60 at the first speed, the speed of the hot air flow in the ventilation gap 60 is the second speed, and the speed of the hot air flow after flowing out from the ventilation gap 60 is the third speed. Since the size of the ventilation gap 60 is smaller than the size of the second air channel 50, the second speed is higher than the first speed, and the first speed is higher than the third speed, so that the speed of the hot air flow passing through the wind-shielding member 30 is reduced.

The wind-shielding member 30 effectively reduces the circumferential rotational speed of the hot air flow by making the hot air flow squeezed in the second air channel 50 and then releases it, thereby ensuring the speed reduction of the hot air flow. And this helps the negative pressure formed by the fan 200 to quickly absorb the decelerated hot air and penetrate the food, and also helps to promote the hot air diverted to the side air channel 40, thereby improving the heat exchange effect of the second air channel 50, which helps to achieve a consistent heating effect on the top and bottom surfaces of the food.

In some embodiments, the wind in the first air channel 40 enters the second air channel 50 through the air passage hole 211, and the fan 200 moves to drive the wind flowing in the second air channel 50 to act on the wind entering the second air channel 50 through the air passage hole 211. The air pressure P1 located in the first air channel 40 is relatively weak, and a stronger air pressure P2 is formed near the edge of the bottom wall 21 of the first baking pan 20, which helps to suppress the hot air flow of the second air channel 50 near the edge of the bottom wall 21, effectively avoiding the hot air flow directly from the hollow of the bottom wall 21 of the first baking pan 20 to penetrate food upwards without deceleration of the wind-shielding member 30, and effectively ensuring that the hot air flow entering the second air channel 50 is squeezed by the wind-shielding member 30 and decelerates rapidly.

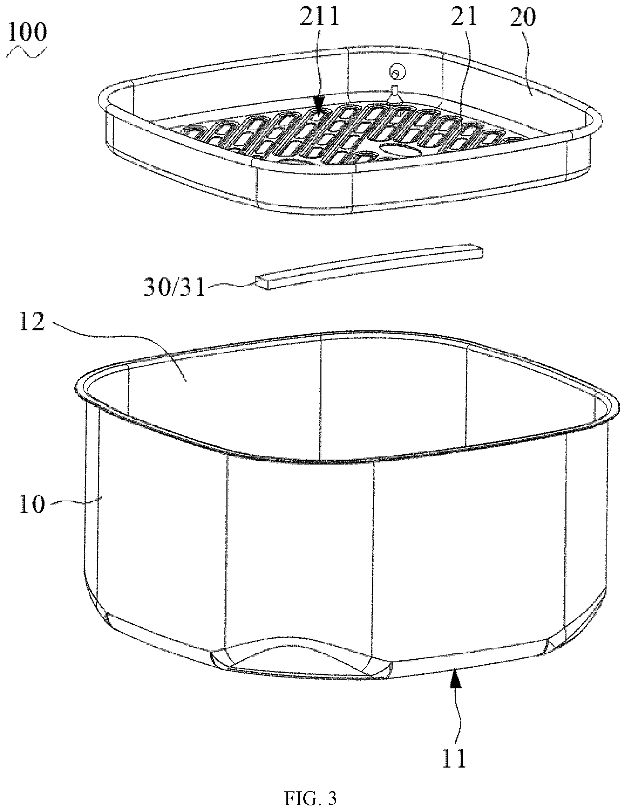

In some embodiments, as shown in FIG. 3, the wind-shielding member 30 comprises wind-shielding ribs 31. The form of the ribs helps the wind-shielding member 30 to decelerate the hot air flow better, and also helps to simplify the structure of the wind-shielding member 30.

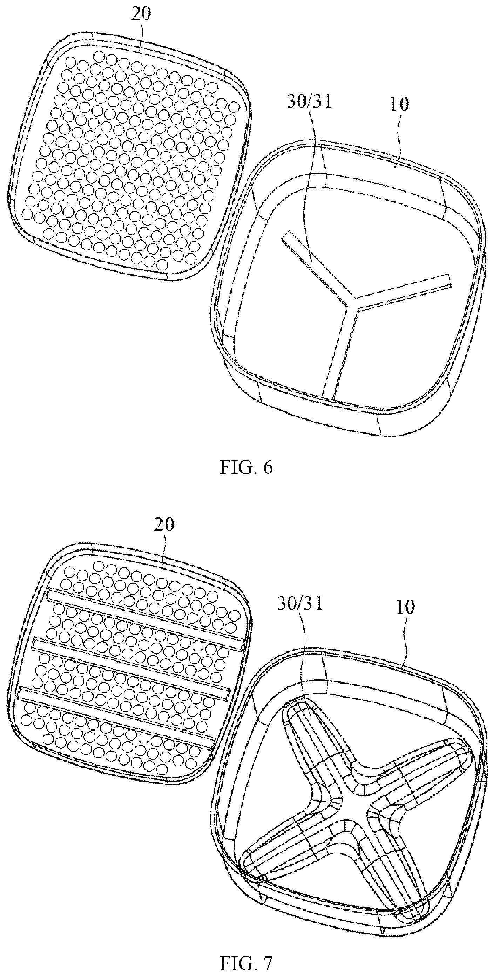

In some embodiments, as shown in FIG. 6, the wind-shielding ribs 31 are arranged in a vertical plane, extending radially and converging at the center of the wind-shielding member 30. Extending in the radial direction may be that the wind-shielding ribs 31 extend along the radial direction of the first baking pan 20, and may also mean that the wind-shielding ribs 31 extend along the radial direction of the frying bucket 10. In this way, it is helpful to improve the speed-reducing effect of the wind-shielding member 30 on the hot air flow, so that the hot air flow is squeezed by the wind-shielding member 30 and decelerates quickly.

In some embodiments, there are three or more wind-shielding ribs 31, and the wind-shielding ribs 31 are basically arranged in a cross, as shown in FIG. 7. This helps the helical thermal air flow to be slowed down under the influence of multiple wind-shielding ribs 31.

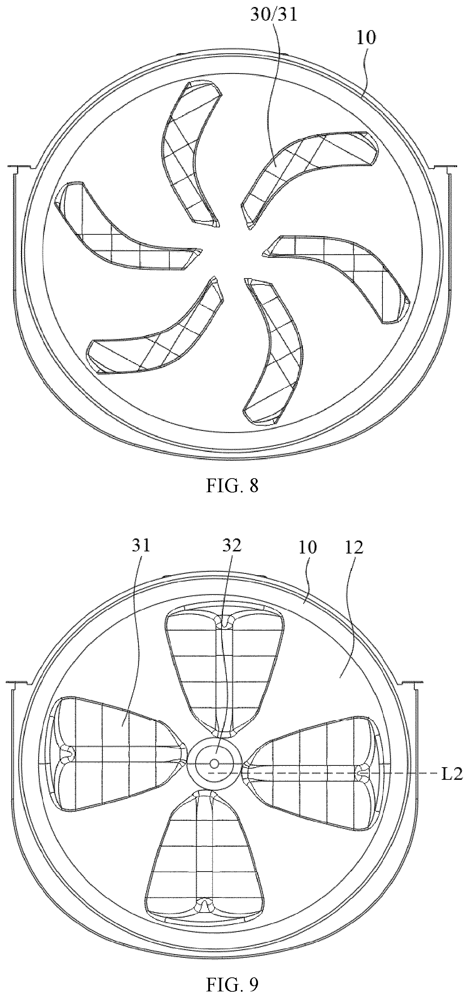

In some embodiments, as shown in FIG. 8, each wind-shielding rib 31 has a curved extension, and the bending direction may be opposite to the rotation direction of the fan 200, so that the wind-shielding rib 31 can decelerate the hot air flow better.

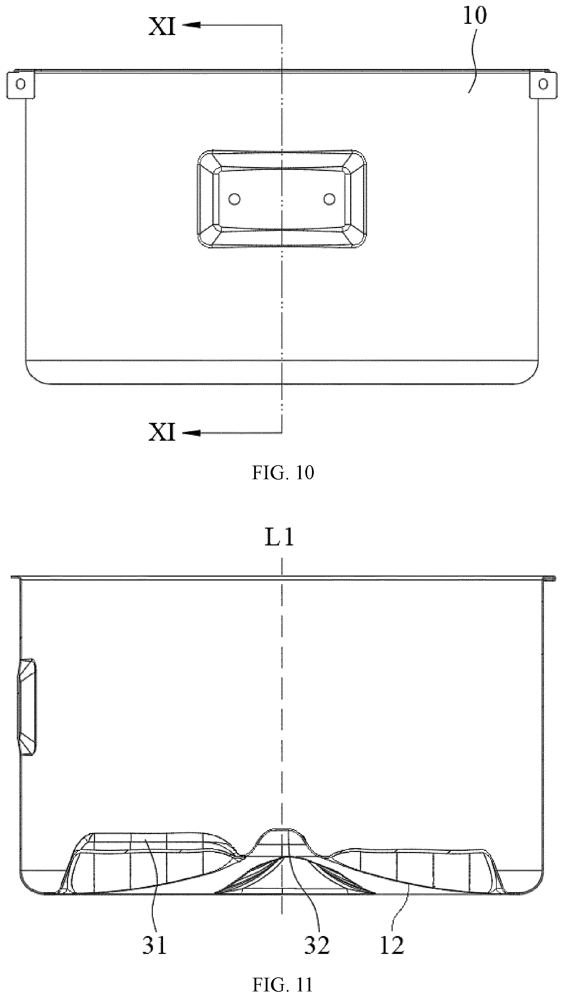

In some embodiments, referring to FIGS. 9 to 11, the wind-shielding member 30 comprises a raised portion 32 and at least two wind-shielding ribs 31. The raised portion 32 is arranged on the frying bucket 10, and the raised portion 32 is located in the second air channel 50; at least two wind-shielding ribs 31 are arranged at intervals around the raised portion 32. In this way, since at least two wind-shielding ribs 31 are arranged at intervals and do not meet each other at the center, the air flow is easy to form a spiral at the center. The raised portion 32 is arranged in the middle of at least two wind-shielding ribs 31, which can reduce the air flow to form a spiral air flow in the center, helping to prevent the air flow from losing the ability to penetrate upwards through the food on the first baking pan 20.

In some embodiments, an interval is provided between the end of each raised portion 32 close to the wind-shielding rib 31 and the raised portion 32, that is, the end of the wind-shielding rib 31 close to the raised portion 32 and the raised portion 32 are spaced apart from each other. In this way, it is helpful for the cooperation between the raised portion 32 and the wind-shielding rib 31 to decelerate the hot air flow better.

In some embodiments, along the direction from the raised portion 32 to the fan 200, the raised portion 32 is at least one of constricted conical shapes, conical shapes, and hemispherical shapes. In this way, the raised portion 32 is facilitated to be manufactured and shaped, and it is also helpful for the raised portion 32 to better reduce the air flow to form a spiral airflow in the center.

In some embodiments, a flow guide surface 12 is formed on the bottom of the frying bucket 10, and the raised portion 32 and at least two wind-shielding ribs 31 are disposed on the flow guide surface 12. In this way, the flow guide surface 12 helps to make the hot air flow flow to the raised portion 32 and the wind-shielding rib 31, and then helps the raised portion 32 and the wind-shielding rib 31 to reduce the speed of the hot air flow.

In some embodiments, the flow guide surface 12 is a plane, which is convenient for manufacturing and shaping the frying bucket 10.

In some embodiments, along the direction from the wind-shielding rib 31 to the fan 200, the flow guide surface 12 is at least one of a constricted conical shape, a conical shape, and a spherical shape. In this way, the flow guide surface 12 can also reduce the speed of the hot air flow.

In some embodiments, the flow guide surface 12 comprises a center line L1 extending along the vertical direction. The wind-shielding rib 31 extends along the extension line L2 on the horizontal plane toward a direction close to the center line, and the extension line and the center line do not intersect. The extension line comprises a straight line and/or a curved line. In this way, it is helpful for the eccentric arrangement of the wind-shielding rib 31 relative to the flow guide surface 12, and decelerating the spiral downward air flow better.

In some embodiments, the number of wind-shielding ribs 31 is an even number, and the even-numbered wind-shielding ribs 31 form a group of two, arranged on both sides of the center line, and the extension lines of the same group of wind-shielding ribs 31 are located on the center line. For example, one is located at the front side, and the other is located at the rear side, that is, the wind-shielding ribs 31 of the same group are not biased in one direction, so that the structure is more reasonable. In an embodiment, the extension line comprises a straight line, and the straight line or the extension line of the straight line does not intersect the central line.

In some embodiments, the extension line comprises a curved line, and a tangent line at an end point of the curved line near the center line or an extension line along the original curvature does not intersect the center line.

In some embodiments, the extension line comprises connected curved lines and straight lines, and one of the curved lines and the straight lines that is closer to the center line does not intersect the center line.

In some embodiments, the extension line comprises a connected first extension section and a second extension section, and the first extension section is arranged closer to the center line relative to the second extension section; the first extension section is a straight line, and the second extension section is a curved line; or the first extension section is a curved line and the second extension section is a straight line; or the first extension section is a first curved line and the second extension section is a second curved line, and the curvatures of the first curved line and the second curved line are the same or different.

In some embodiments, a specific description is made for the extension direction of the wind-shielding rib 31, and the extension direction of the wind-shielding rib 31 is determined by the extension line. The extension line comprises a connected first extension section and a second extension section. The first extension section is arranged inwardly, and the second extension section is arranged outwardly, that is, in the direction close to the center line, the wind-shielding rib 31 first extends along the second extension section, and then extends along the first extension section, and the first extension section does not intersect the center line.

In some embodiments, the wind-shielding rib 31 first extends along a straight line, and then extends along a curved line.

In some embodiments, the wind-shielding rib 31 first extends along a curved line, and then extends along a straight line.

In some embodiments, the wind-shielding rib 31 may extend along a arc line, or the wind-shielding rib 31 may extend along arc lines with different curvatures.

In some embodiments, the flow guide surface 12 comprises a center line L1 extending along the vertical direction, and the wind-shielding rib 31 is arranged relative to the center line.

In some implementations, the second air channel 50 of the frying bucket assembly 100 can be arranged in various forms.

For example, as shown in FIG. 4, the bottom wall 21 of the first baking pan 20 and the bottom 11 of the frying bucket 10 may be spaced apart and surround a second air channel 50.

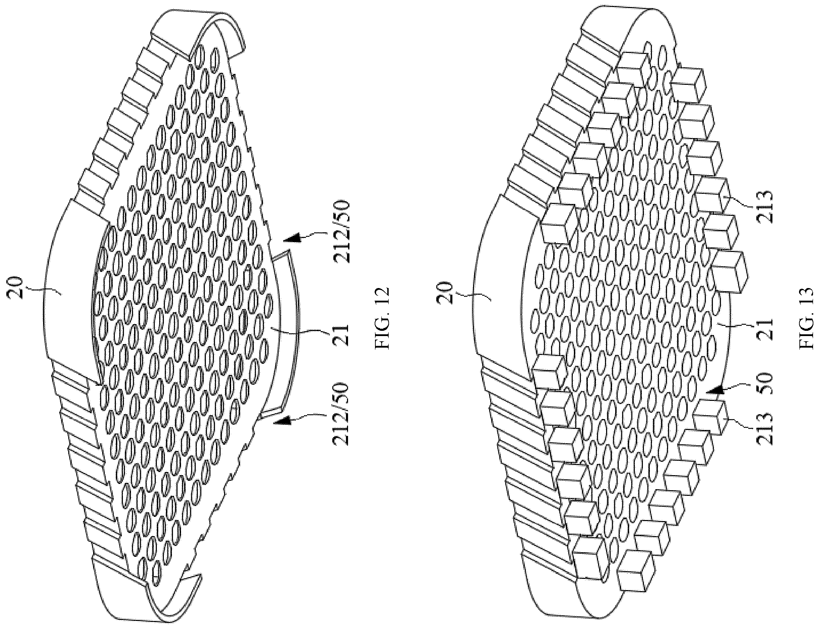

For another example, as shown in FIG. 12, the bottom wall 21 of the first baking pan 20 facing the bottom 11 of the frying bucket 10 can be provided with a bottom wall air guide channel 212, and the bottom wall air guide channel 212 can be used as the second air channel 50. The bottom wall air guide channel 212 may pass through both sides of the bottom wall 21 along the width direction or the length direction. The number of the bottom wall air guide channels 212 may be multiple, and the multiple bottom wall air guide channels 212 communicate with each other. At least one parameter such as shape and width among the plurality of bottom wall air guide channels 212 may be the same or partly the same or completely different. A surface of the bottom wall 21 of the first baking pan 20 facing the bottom 11 of the frying bucket 10 may contact or be spaced from the bottom 11 of the frying bucket 10.

For another example, as shown in FIG. 13, the surface of the bottom wall 21 of the first baking pan 20 facing the bottom 11 of the frying bucket 10 can be protruded with a plurality of bottom wall air guide members 213, and the plurality of bottom wall air guide members 213 can be distributed at intervals along the edge of the bottom wall 21 of the first baking pan 20. In this way, the bottom wall air guide member 213 helps to separate the bottom wall 21 of the first baking pan 20 from the bottom 11 of the frying bucket 10, and also helps to form the second air channel 50. The bottom wall air guide member 213 may contact or be spaced from the bottom 11 of the frying bucket 10. At least one parameter such as shape, width, and height among the plurality of bottom wall air guide members 213 may be the same or partly the same or completely different.

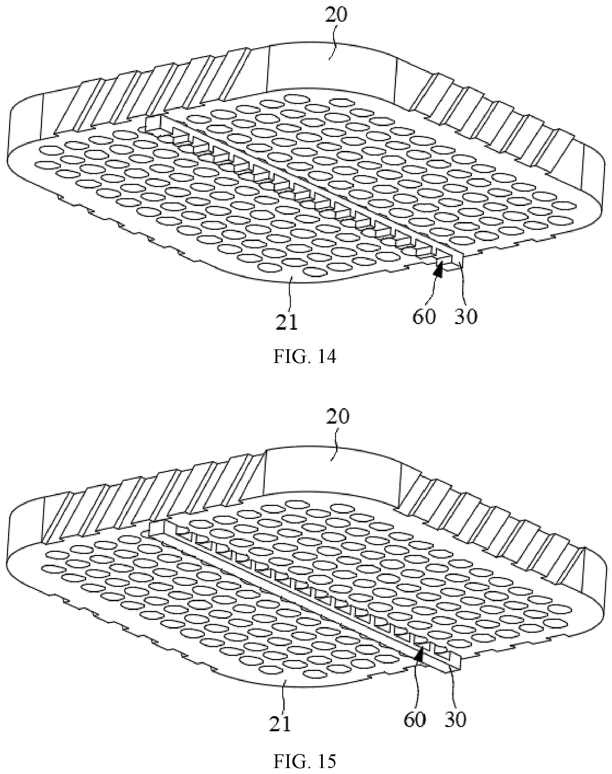

In some embodiments, referring to FIG. 14, the wind-shielding member 30 may be connected to the bottom wall 21 of the first baking pan 20, and the wind-shielding member 30 may have a ventilation gap 60 with the bottom 11 of the frying bucket 10. In this way, it helps to simplify the structure of the frying bucket 10.

In some embodiments, referring to FIG. 15, the wind-shielding member 30 may be connected to the bottom wall 21 of the first baking pan 20, and the wind-shielding member 30 may have a ventilation gap 60 with the bottom wall 21 of the first baking pan 20. In this way, it helps to simplify the structure of the frying bucket 10.

In some embodiments, the wind-shielding member 30 and the bottom wall 21 of the first baking pan 20 may be integrally formed, for example, the wind-shielding member 30 and the bottom wall 21 of the first baking pan 20 may be integrally formed through a mold. The wind-shielding member 30 and the bottom wall 21 of the first baking pan 20 can also be two independent structures, and the two can be connected together by gluing, welding, buckling, threading, fasteners or other means after forming. In other embodiments, the wind-shielding member 30 and the bottom wall 21 of the first baking pan 20 may also be connected in other ways.

In some embodiments, referring to FIG. 4, the wind-shielding member 30 may be connected to the bottom 11 of the frying bucket 10, and the wind-shielding member 30 may have a ventilation gap 60 with the bottom wall 21 of the first baking pan 20. In this way, it helps to simplify the structure of the first baking pan 20.

In some embodiments, the wind-shielding member 30 may be connected to the bottom 11 of the frying bucket 10, and the wind-shielding member 30 may have a ventilation gap 60 with the bottom 11 of the frying bucket 10.

In some embodiments, the wind-shielding member 30 and the frying bucket 10 may be integrally formed, for example, the wind-shielding member 30 and the frying bucket 10 may be integrally formed through a mold. The wind-shielding member 30 and the frying bucket 10 can also be two independent structures, which can be connected together by gluing, welding, buckling, screw connection, fasteners or other means after forming. In other embodiments, the wind-shielding member 30 and the frying bucket 10 may also be connected in other ways.

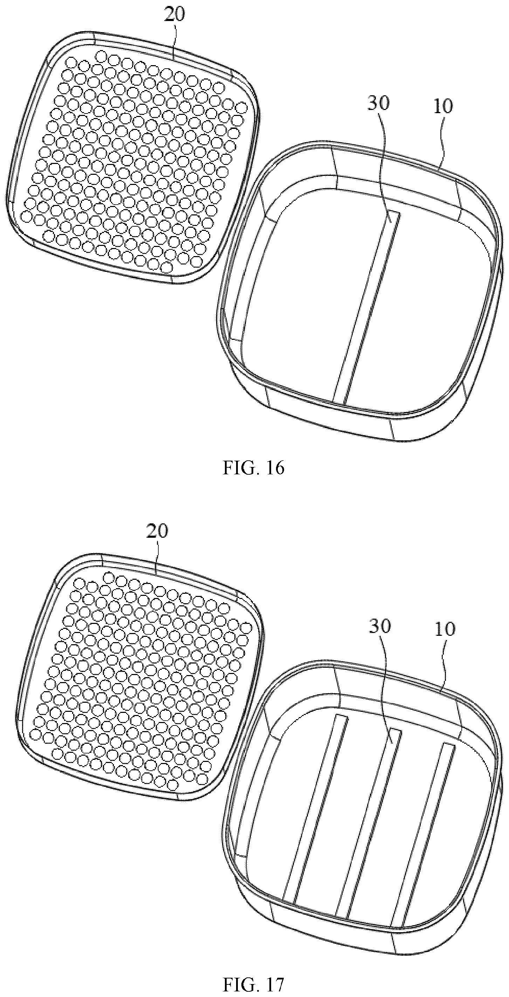

In some embodiments, referring to FIG. 16, the wind-shielding member 30 may be substantially elongated. For example, the wind-shielding member 30 may be generally in the shape of a round rod, an elliptical rod, a square rod or other shapes.

In some embodiments, wind-shielding member 30 may be generally corrugated.

In some embodiments, the length direction of the wind-shielding member 30 may be parallel to the width direction of the first baking pan 20. For another example, the length direction of the wind-shielding member 30 may be parallel to the length direction of the first baking pan 20. For another example as shown in FIG. 7, the length direction of the wind-shielding member 30 may be parallel to the diagonal of the first baking pan 20.

In some embodiments, there may be multiple wind-shielding member 30, and at least one parameter such as the shape and size of the plurality of wind-shielding member 30 may be the same or partly the same or completely different.

In some embodiments, referring to FIG. 17, a plurality of wind-shielding member 30 may be arranged at intervals along the width direction of the first baking pan 20.

In some embodiments, a plurality of wind-shielding member 30 may be arranged at intervals along the length direction of the first baking pan 20.

In some embodiments, besides being arranged at intervals along the width direction or the length direction of the first baking pan 20, the plurality of wind-shielding member 30 may also be arranged in other forms. For example, a plurality of wind-shielding member 30 may be distributed around the center line of the first baking pan 20.

For example, as shown in FIG. 6, the number of wind-shielding members 30 is three, and the three wind-shielding members 30 are distributed around the center line of the first baking pan 20, and the angle between two adjacent wind-shielding members 30 can be roughly 120°.

For example, as shown in FIG. 7, the number of wind-shielding members 30 is four, and the four wind-shielding members 30 are distributed around the center line of the first baking pan 20, and the angle between two adjacent wind-shielding members 30 can be approximately 90°.

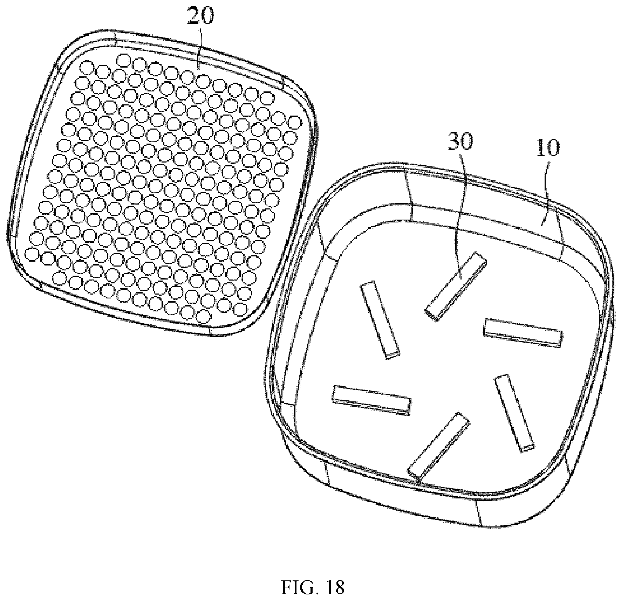

For example, as shown in FIG. 18, the number of wind-shielding members 30 is six, and the six wind-shielding members 30 are distributed around the center line of the first baking pan 20. The angle between two adjacent wind-shielding members 30 can be approximately 60°.

In some embodiments, the plurality of wind-shielding members 30 may be connected to each other, or may be partially connected, or may be spaced apart from each other. For example, as shown in FIG. 6 and FIG. 7, multiple wind-shielding members 30 may be connected to each other. As another example, as shown in FIG. 17 and FIG. 18, a plurality of wind-shielding members 30 are spaced apart from each other.

In some embodiments, when there are multiple wind-shielding members 30, at least one wind-shielding member 30 can be connected to the bottom wall 21 of the first baking pan 20, and at least one wind-shielding member 30 can be connected to the bottom 11 of the frying bucket 10.

In some embodiments, when there are multiple wind-shielding members 30, at least one wind-shielding member 30 may have a ventilation gap 60 with the bottom wall 21 of the first baking pan 20, and at least one wind-shielding member 30 may have a ventilation gap 60 with the bottom 11 of the frying bucket 10.

In some embodiments, the frying bucket assembly 100 can also comprise at least one second baking pan 70, and at least one second baking pan 70 is located between the first baking pan 20 and the fan 200. A first air channel 40 is formed between the second baking pan 70 and the fan 200, and a third air channel 80 is formed between the second baking pan 70 and the fan 200. In this way, an air channel is formed in the up and down direction of each baking pan, which helps to achieve a consistent heating effect on the upper and lower surfaces of the food. For example, the hot air flow of the third air channel 80 can heat the upper surface of the food on the second baking pan 70; and the hot air flow of the first air channel 40 can flow from the second baking pan 70 to the food, heating the lower surface of the food and making the upper and lower surfaces of the food heated more evenly. In addition, when food is placed on the first baking pan 20, the food on the first baking pan 20 acts similarly as the wind-shielding member 30. By making the hot air flow squeezed in the first air channel 40 and then released, the circumferential rotation speed of the hot air flow is effectively reduced, which helps the negative pressure formed by the fan 200 to quickly absorb the decelerated hot air flow and penetrate the food, and then improve the heat exchange effect of the first air channel 40, thereby helping to achieve a consistent heating effect on the upper and lower surfaces of the food.

In some embodiments, the number of second baking pans 70 can be multiple, and the plurality of second baking pans 70 are arranged at intervals along the height direction of the air fryer, so that the effect of the air channel formed in the up and down direction of each second baking pan 70 is similar to that of the first air channel 40 and the second air channel formed in the up and down direction of the first baking pan 20.

In the present application, terms such as "installation", "connection" and "fixation" should be interpreted in a broad sense unless otherwise clearly specified or limited. For example, it can be a fixed connection, a detachable connection, or an integral connection; it can be a mechanical connection or an electrical connection; it can be a direct connection or an indirect connection through an intermediary, or it can be an internal connection between two components; it can also be only surface contact, or surface contact connection through an intermediary. Those skilled in the art can understand the specific meanings of the above terms in the present application according to specific situations.

In addition, the terms "first", "second" and the like are only used for distinguishing descriptions, and should not be interpreted as specific or special structures. The description of the terms "some embodiments", "other embodiments" and the like mean that a specific feature, structure, material or characteristic described in connection with the embodiment or example is included in at least one embodiment or example of the present application. In the present application, the schematic representations of the above terms do not necessarily refer to the same embodiment or example. Furthermore, the described specific features, structures, materials or characteristics may be combined in any suitable manner in any one or more embodiments or examples. In addition, those skilled in the art can combine different embodiments or examples and features of different embodiments or examples described in the present application without conflicting with each other.

## Claims

1. An air fryer (1000), comprising:
a pot body (300);
a fan (200) provided in the pot body (300); and
a frying bucket assembly (100) provided with a frying bucket (10), a first baking pan (20) and a wind-shielding member (30); wherein the first baking pan (20) is located in the frying bucket (10) and below the fan (200); a first air channel (40) is formed above the first baking pan (20), and a second air channel (50) is formed below the first baking pan (20); the wind-shielding member (30) is located in the second air channel (50),
wherein the wind-shielding member (30) reduces a speed of wind passing through the wind-shielding member (30) so that the wind is easier to pass through the first baking pan (20) from a position close to a center under a negative pressure formed by the fan (200), and,
an air passage hole (211) is formed on the first baking pan (20),
**characterised in that**
wind in the first air channel (40) enters the second air channel (50) through the air passage hole (211); a wind driven by a movement of the fan (200) to flow in the second air channel (50) acts on the wind entering the second air channel (50) through the air passage hole (211); wherein the wind driven by the movement of the fan (200) to flow in the second air channel (50) makes the wind entering the second air channel (50) through the air passage hole (211) to move in a lower pressure position.

2. The air fryer (1000) according to claim 1, wherein the wind-shielding member (30) comprises a plurality of wind-shielding ribs (31).

3. The air fryer (1000) according to claim 2, wherein the wind-shielding ribs (31) are provided in a vertical plane, extending in a radial direction, and converging at a central position of the wind-shielding member (30); or wherein three or more of the wind-shielding ribs (31) are provided and are arranged substantially in a cross.

4. The air fryer (1000) according to claim 3, wherein each of the wind-shielding ribs (31) is provided with a curved extension.

5. The air fryer (1000) according to claim 1, wherein the wind-shielding member (30) comprises:
a raised portion (32) provided on the frying bucket (10) and located in the second air channel (50); and
at least two wind-shielding ribs (31) provided around the raised portion (32) at an interval.

6. The air fryer (1000) according to claim 5, wherein an interval is provided between an end, close to the wind-shielding rib (31), of each raised portion (32) and the raised portion (32); and/or along a direction from the raised portion (32) to the fan (200), the raised portion (32) is of at least one of a contracted conical shape, a conical shape and a hemispherical shape.

7. The air fryer (1000) according to claim 6, wherein a flow guide surface (12) is formed on a bottom (11) of the frying bucket (10), and the raised portion (32) and at least two of the wind-shielding ribs (31) are provided on the flow guide surface (12).

8. The air fryer (1000) according to claim 7, wherein along a direction from the wind-shielding rib (31) to the fan (200), the flow guide surface (12) is of at least one of a constricted conical shape, a conical shape, and a spherical shape; or, the flow guide surface (12) is a plane; wherein preferably the flow guide surface (12) comprises a center line L1 extending in a vertical direction; the wind-shielding rib (31) extends along an extension line L2 on a horizontal plane in a direction close to the center line, and the extension line does not intersect the center line; the extension line comprises a straight line and/or a curved line.

9. The air fryer (1000) according to claim 1, wherein the wind-shielding member (30) is elongated; wherein preferably a length direction of the wind-shielding member (30) is parallel to a width direction or a length direction or a diagonal line of the first baking pan (20).

10. The air fryer (1000) according to claim 1, wherein the wind-shielding member (30) is arc-shaped or wave-shaped; or wherein a plurality of wind-shielding members (30) are distributed around a center line of the first baking pan (20) or are arranged at an interval along a width direction or a length direction of the first baking pan (20).

11. The air fryer (1000) according to any one of claims 1 to 10, wherein the wind-shielding member (30) is connected to a bottom (11) of the frying bucket (10) and a ventilation gap (60) is provided between the wind-shielding member (30) and a bottom wall (21) of the first baking pan (20); and/or, the wind-shielding member (30) is connected to a bottom of the first baking pan (20) and a ventilation gap (60) is provided between the wind-shielding member (30) and the bottom (11) of the frying bucket (10).

12. The air fryer (1000) according to claim 11, wherein a surface, facing the bottom (11) of the frying bucket (10), of the bottom wall (21) of the first baking pan (20) is provided with an air guide channel (212), and the air guide channel (212) is configured as the second air channel (50); wherein preferably the surface, facing the bottom (11) of the frying bucket (10), of the bottom wall (21) of the first baking pan (20) is protruded with a plurality of air guide members (213), and the plurality of air guide members (213) are distributed at an interval along an edge of the bottom wall (21).

13. The air fryer (1000) according to any one of claims 1 to 10, wherein the frying bucket assembly (100) further comprises:
at least a second baking pan (70) located between the first baking pan (20) and the fan (200);
wherein the first air channel (40) is formed between the second baking pan (70) and the first baking pan (20), and a third air channel (80) is formed between the second baking pan (70) and the fan (200).

## Patentansprüche

1. Heißluftfritteuse (1000), umfassend:
einen Topfkörper (300);
ein im Topfkörper (300) vorgesehenes Gebläse (200); und
eine Frittierkorb-Anordnung (100), die mit einem Frittierkorb (10), einer ersten Backform (20) und einem Windschutzelement (30) versehen ist; wobei sich die erste Backform (20) im Frittierkorb (10) und unterhalb des Gebläses (200) befindet; ein erster Luftkanal (40) oberhalb der ersten Backform (20) ausgebildet ist und ein zweiter Luftkanal (50) unterhalb der ersten Backform (20) ausgebildet ist; sich das Windschutzelement (30) im zweiten Luftkanal (50) befindet,
wobei das Windschutzelement (30) eine Geschwindigkeit des durch das Windschutzelement (30) strömenden Windes verringert, so dass der Wind leichter von einer Position nahe einer Mitte unter einem durch das Gebläse (200) erzeugten Unterdruck durch die erste Backform (20) strömen kann,
und
eine Luftdurchlassöffnung (211) an der ersten Backform (20) ausgebildet ist, **dadurch gekennzeichnet, dass** der Wind im ersten Luftkanal (40) durch die Luftdurchlassöffnung (211) in den zweiten Luftkanal (50) eintritt; ein Wind, der durch die Bewegung des Gebläses (200) angetrieben wird, in den zweiten Luftkanal (50) zu strömen, auf den durch die Luftdurchlassöffnung (211) in den zweiten Luftkanal (50) eintretenden Wind einwirkt; wobei der Wind, der durch die Bewegung des Gebläses (200) angetrieben wird, in den zweiten Luftkanal (50) zu strömen, bewirkt, dass sich der durch die Luftdurchlassöffnung (211) in den zweiten Luftkanal (50) eintretende Wind in eine Position mit niedrigerem Druck bewegt.

2. Heißluftfritteuse (1000) gemäß Anspruch 1, wobei das Windschutzelement (30) eine Vielzahl von Windschutzrippen (31) umfasst.

3. Heißluftfritteuse (1000) gemäß Anspruch 2, wobei die Windschutzrippen (31) in einer vertikalen Ebene vorgesehen sind, sich in radialer Richtung erstrecken und an einer zentralen Position des Windschutzelements (30) zusammenlaufen; oder wobei drei oder mehr der Windschutzrippen (31) vorgesehen sind und im Wesentlichen kreuzförmig angeordnet sind.

4. Heißluftfritteuse (1000) gemäß Anspruch 3, wobei jede der Windschutzrippen (31) mit einer gekrümmten Verlängerung versehen ist.

5. Heißluftfritteuse (1000) gemäß Anspruch 1, wobei das Windschutzelement (30) Folgendes umfasst:
einen erhöhten Bereich (32), der an dem Frittierkorb (10) vorgesehen ist und sich im zweiten Luftkanal (50) befindet; und
mindestens zwei Windschutzrippen (31), die in einem Abstand um den erhöhten Bereich (32) herum vorgesehen sind.

6. Heißluftfritteuse (1000) gemäß Anspruch 5, wobei ein Abstand zwischen einem Ende jedes erhöhten Bereichs (32), der nahe der Windschutzrippe (31) liegt, und dem erhöhten Bereich (32) vorgesehen ist; und/oder entlang einer Richtung von dem erhöhten Bereich (32) zum Gebläse (200) der erhöhte Bereich (32) mindestens eine der folgenden Formen aufweist: eine verjüngte konische Form, eine konische Form und eine halbkugelförmige Form.

7. Heißluftfritteuse (1000) gemäß Anspruch 6, wobei eine Strömungsleitfläche (12) an einem Boden (11) des Frittierkorbs (10) ausgebildet ist und der erhöhte Bereich (32) und mindestens zwei der Windschutzrippen (31) auf der Strömungsleitfläche (12) vorgesehen sind.

8. Heißluftfritteuse (1000) gemäß Anspruch 7, wobei die Strömungsleitfläche (12) entlang einer Richtung von der Windschutzrippe (31) zum Gebläse (200) mindestens eine der folgenden Formen aufweist: eine verjüngte konische Form, eine konische Form und eine sphärische Form; oder die Strömungsleitfläche (12) eine Ebene ist; wobei die Strömungsleitfläche (12) vorzugsweise eine Mittellinie L1 umfasst, die sich in einer vertikalen Richtung erstreckt; sich die Windschutzrippe (31) entlang einer Verlängerungslinie L2 auf einer horizontalen Ebene in einer Richtung nahe der Mittellinie erstreckt und die Verlängerungslinie die Mittellinie nicht schneidet; wobei die Verlängerungslinie eine gerade Linie und/oder eine gekrümmte Linie umfasst.

9. Heißluftfritteuse (1000) gemäß Anspruch 1, wobei das Windschutzelement (30) länglich ist; wobei vorzugsweise eine Längenrichtung des Windschutzelements (30) parallel zu einer Breitenrichtung oder einer Längenrichtung oder einer Diagonalen der ersten Backform (20) verläuft.

10. Heißluftfritteuse (1000) gemäß Anspruch 1, wobei das Windschutzelement (30) bogenförmig oder wellenförmig ist; oder wobei eine Vielzahl von Windschutzelementen (30) um eine Mittellinie der ersten Backform (20) verteilt sind oder in einem Abstand entlang einer Breiten- oder Längenrichtung der ersten Backform (20) angeordnet sind.

11. Heißluftfritteuse (1000) gemäß einem der Ansprüche 1 bis 10, wobei das Windschutzelement (30) mit einem Boden (11) des Frittierkorbs (10) verbunden ist und ein Belüftungsspalt (60) zwischen dem Windschutzelement (30) und einer Bodenwand (21) der ersten Backform (20) vorgesehen ist; und/oder das Windschutzelement (30) mit einem Boden der ersten Backform (20) verbunden ist und ein Belüftungsspalt (60) zwischen dem Windschutzelement (30) und dem Boden (11) des Frittierkorbs (10) vorgesehen ist.

12. Heißluftfritteuse (1000) gemäß Anspruch 11, wobei eine dem Boden (11) des Frittierkorbs (10) zugewandte Fläche der Bodenwand (21) der ersten Backform (20) mit einem Luftleitkanal (212) versehen ist und der Luftleitkanal (212) als der zweite Luftkanal (50) konfiguriert ist; wobei vorzugsweise die dem Boden (11) des Frittierkorbs (10) zugewandte Fläche der Bodenwand (21) der ersten Backform (20) mit einer Vielzahl von Luftleitelementen (213) versehen ist und die Vielzahl von Luftleitelementen (213) in einem Abstand entlang einer Kante der Bodenwand (21) verteilt ist.

13. Heißluftfritteuse (1000) gemäß einem der Ansprüche 1 bis 10, wobei die Frittierkorb-Anordnung (100) ferner Folgendes umfasst:
mindestens eine zweite Backform (70), die sich zwischen der ersten Backform (20) und dem Gebläse (200) befindet;
wobei der erste Luftkanal (40) zwischen der zweiten Backform (70) und der ersten Backform (20) ausgebildet ist und ein dritter Luftkanal (80) zwischen der zweiten Backform (70) und dem Gebläse (200) ausgebildet ist.

## Revendications

1. Une friteuse à air chaud (1000), comprenant :
un corps de cuve (300) ;
un ventilateur (200) disposé dans le corps de cuve (300) ; et
un ensemble de bac de friture (100) muni d'un bac de friture (10), d'un premier moule de cuisson (20) et d'un élément de protection contre le vent (30); dans laquelle le premier moule de cuisson (20) est situé dans le bac de friture (10) et en dessous du ventilateur (200); un premier canal d'air (40) est formé au-dessus du premier moule de cuisson (20), et un deuxième canal d'air (50) est formé en dessous du premier moule de cuisson (20) ; l'élément de protection contre le vent (30) est situé dans le deuxième canal d'air (50),
dans lequel l'élément de protection contre le vent (30) réduit une vitesse de flux d'air traversant l'élément de protection contre le vent (30) de sorte que l'air puisse traverser plus facilement le premier moule de cuisson (20) depuis une position proche d'un centre, sous l'effet d'une dépression créée par le ventilateur (200 ),
et,
un orifice de passage d'air (211) est formé sur le premier moule de cuisson (20), **caractérisé en ce que** de l'air présent dans le premier canal d'air (40) pénètre dans le deuxième canal d'air (50) par l'intermédiaire de l'orifice de passage d'air (211) ; un flux d'air entraîné par un mouvement du ventilateur (200) pour circuler dans le deuxième canal d'air (50) agit sur le flux d'air entrant dans le deuxième canal d'air (50) par l'orifice de passage d'air (211); dans lequel le flux d'air entraîné par le mouvement du ventilateur (200) pour circuler dans le deuxième canal d'air (50) fait en sorte que l'air entrant dans le deuxième canal d'air (50) par l'orifice de passage d'air (211) se déplace vers une zone de pression inférieure .

2. Friteuse à air chaud (1000) selon la revendication 1, dans laquelle l'élément de protection contre le vent (30) comprend une pluralité de nervures de protection contre le vent (31).

3. Friteuse à air chaud (1000) selon la revendication 2, dans laquelle les nervures de protection contre le vent (31) sont disposées dans un plan vertical, s'étendant dans une direction radiale, et convergent vers une position centrale de l'élément de protection contre le vent (30); ou dans laquelle trois nervures de protection contre le vent (31) ou plus sont prévues et sont agencées sensiblement en forme de croix.

4. Friteuse à air chaud (1000) selon la revendication 3, dans laquelle chacune des nervures de protection contre le vent (31) est pourvue d'un prolongement incurvé.

5. Friteuse à air chaud (1000) selon la revendication 1, dans laquelle l'élément de protection contre le vent (30) comprend :
une partie surélevée (32) prévue sur le bac de friture (10) et située dans le deuxième canal d'air (50) ; et
au moins deux nervures de protection contre le vent (31) disposées autour de la partie surélevée (32) à un certain intervalle.

6. Friteuse à air chaud (1000) selon la revendication 5, dans laquelle un intervalle est prévu entre une extrémité, proche de la nervure de protection contre le vent (31), de chaque partie surélevée (32) et la partie surélevée (32) ; et/ou le long d'une direction allant de la partie surélevée (32) vers le ventilateur (200), la partie surélevée (32) présente au moins l'une des formes suivantes: une forme conique rétrécie, une forme conique et une forme hémisphérique.

7. Friteuse à air chaud (1000) selon la revendication 6, dans laquelle une surface de guidage d'écoulement (12) est formée sur un fond (11) du bac de friture (10), et la partie surélevée (32) ainsi qu'au moins deux des nervures de protection contre le vent (31) sont prévues sur la surface de guidage d'écoulement (12).

8. Friteuse à air chaud (1000) selon la revendication 7, dans laquelle, le long d'une direction allant de la nervure de protection contre le vent (31) vers le ventilateur (200), la surface de guidage d'écoulement (12) présente au moins l'une des formes suivantes : une forme conique rétrécie, une forme conique et une forme sphérique ; ou bien la surface de guidage d'écoulement (12) est un plan ; dans laquelle, de préférence, la surface de guidage d'écoulement (12) comprend une ligne centrale L1 s'étendant dans une direction verticale ; la nervure de protection contre le vent (31) s'étend le long d'une ligne de prolongement L2 sur un plan horizontal dans une direction proche de la ligne centrale, et la ligne de prolongement ne coupe pas la ligne centrale ; la ligne de prolongement comprend une ligne droite et/ou une ligne courbe.

9. Friteuse à air chaud (1000) selon la revendication 1, dans laquelle l'élément de protection contre le vent (30) est allongé; dans laquelle, de préférence, une direction longitudinale de l'élément de protection contre le vent (30) est parallèle à une direction de largeur ou à une direction de longueur ou à une diagonale du premier moule de cuisson (20).

10. Friteuse à air chaud (1000) selon la revendication 1, dans laquelle l'élément de protection contre le vent (30) est en forme d'arc ou d'onde; ou dans laquelle une pluralité d'éléments de protection contre le vent (30) sont répartis autour d'un axe central du premier moule de cuisson (20) ou sont disposés à intervalles réguliers dans le sens d'une largeur ou d'une longueur du premier moule de cuisson (20).

11. Friteuse à air chaud (1000) selon l'une quelconque des revendications 1 à 10, dans laquelle l'élément de protection contre le vent (30) est relié à un fond (11) du bac de friture (10) et un interstice de ventilation (60) est prévu entre l'élément de protection contre le vent (30) et une paroi de fond (21) du premier moule de cuisson (20); et/ou l'élément de protection contre le vent (30) est relié à un fond du premier moule de cuisson (20) et un interstice de ventilation (60) est prévu entre l'élément de protection contre le vent (30) et le fond (11) du bac de friture (10).

12. Friteuse à air chaud (1000) selon la revendication 11, dans laquelle une surface, tournée vers le fond (11) du bac de friture (10), de la paroi de fond (21) du premier moule de cuisson (20), est pourvue d'un canal de guidage d'air (212), et le canal de guidage d'air (212) est configuré comme le deuxième canal d'air (50) ; dans laquelle, de préférence, la surface, tournée vers le fond (11) du bac de friture (10), de la paroi de fond (21) du premier moule de cuisson (20) est pourvue d'une pluralité d'éléments de guidage d'air (213), et ladite pluralité d'éléments de guidage d'air (213) est répartie à intervalles réguliers le long d'un bord de la paroi de fond (21).

13. Friteuse à air chaud (1000) selon l'une quelconque des revendications 1 à 10, dans laquelle l'ensemble de bac de friture (100) comprend en outre :
au moins un deuxième moule de cuisson (70) situé entre le premier moule de cuisson (20) et le ventilateur (200) ;
dans laquelle le premier canal d'air (40) est formé entre le deuxième moule de cuisson (70) et le premier moule de cuisson (20), et un troisième canal d'air (80) est formé entre le deuxième moule de cuisson (70) et le ventilateur (200).
